Europäisches Patentamt

European Patent Office

Office européen des brevets

(19)

(11) Publication number: **0 133 677**
**A2**

(12) # EUROPEAN PATENT APPLICATION

(21) Application number: **84108949.3**

(22) Date of filing: **27.07.84**

(51) Int. Cl.⁴: **C 02 F 1/44**
**B 01 D 13/00, A 47 L 15/00**

(30) Priority: **05.08.83 IT 2244683**

(43) Date of publication of application:
**06.03.85 Bulletin 85/10**

(84) Designated Contracting States:
**AT BE CH DE FR GB IT LI LU NL SE**

(71) Applicant: **INDUSTRIE ZANUSSI S.p.A.**
**Via Giardini Cattaneo 3**
**I-33170 Pordenone(IT)**

(72) Inventor: **Bianchi, Giuseppe**
**piazza Libia 1**
**F-20135 Milano(IT)**

(72) Inventor: **Tassotti, Sergio**
**via Pionieri dell'Aria 102**
**I-33080 Roveredo in Piano (Pordenone)(IT)**

(72) Inventor: **Milocco, Claudio**
**via Piero Gobetti 4**
**I-33170 Pordenone(IT)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Method and apparatus for the demineralization of water for a dishwashing machine.**

(57) Of the water used for the operating cycle of a dish-washing machine, the water required for the third rinsing phase is demineralized by inverse osmosis.

EP 0 133 677 A2

Croydon Printing Company Ltd

# 1 Description

The present invention relates to a method and apparatus for the demineralization of circulation water in a dishwashing machine, and more particularly concerns a method and apparatus for the demineralization of water using the principle of inverse osmosis.

It is generally known that dishwashing machines, when using a water supply having a hardness above 20° F, have to be provided with a decalcifier device effective to retain mainly the salt, such as carbonates, sulphates and chlorates of calcium and magnesium which contribute for the major part to unsatisfactory results of the dishwashing process.

If it were possible to wash the dishes with demineralized water, the logical result would be the avoidance of the annoying whitish deposits dulling the transparence of glassware and progressively accumulating during successive washing cycles.

It is particularly during the third rinsing cycle that the phrenomenon of salt deposits occurs due to the evaporation of water remaining on the surfaces of the dishes, glasses and the like in spite of the addition of gloss finish additives acting as detergents and surface-active agents. This evaporation results in an increased concentration of the remaining salts, followed by supersaturation and finally, precipitation.

The ion exchange resin decalcifier devices employed in conventional dishwashing machines serve their intended purpose in a satisfactory manner. They have been used, after all, for a considerable number of years, so that they have acquired a satisfactory level of reliability and precision.

These devices present a number of disadvantages, however, such as the necessity of a periodic replenishment with salt (sodium chloride) employed for the regeneration of the resin, and the less than complete decalcification of the water, whereby the hardness of the water is reduced to acceptable levels, but never to zero.

In addition, the amount of regeneration salt consumed per operating cycle depends on the hardness of the water supply, so that the user has to adjust the device to his particular situation. Means for such adjustment are provided in practically all dishwashing machines of recent design.

From the technical viewpoint, the problem of the presence of salt in the tub is connected with the problem of corrosion. If the water full of sodium chloride after regeneration of the resin is not sufficiently diluted and is left to act during the intervals between dishwashing operations, the surfaces of the tub may be severely attacked by corrosion.

Another negative consequence of the presence of the regeneration products resides in the fact that, if not sufficiently diluted, these products themselves may pose problems, although on a reduced scale, with respect to the cleanliness of glassware.

There remains thus the problem of providing a system for the demineralization of water to be employed in a dishwashing machine for solving or at least reducing the problems connected to the employ of the resin decalcifier devices.

Amongst the various known systems for the demineralization or desalinization of water there is the one named inverse osmosis, in which the water to be treated is caused to flow in contact with a diaphragm capable of selectively retaining the molecules of the substances to be separated out of the water.

For treating major amounts of water in such manner, however, the surface of the diaphragm has to be of considerable size, which is obviously not compatible with the limited and frequently extremely reduced space available in a dishwashing machine.

In accordance with the invention, the problems briefly outlined above are solved by a method and apparatus for the demineralization of circulation water in a dishwashing machine, such method and apparatus being characterized in that, while maintaining a substantially compact dimensioning of the osmotic diaphragm, only a reduced proportion of the circulation water, and preferably the water for the third rinsing step, is demineralized by inverse osmosis during a period corresponding to the duration of the full dishwashing cycle.

In other words, the inverse osmosis demineralization apparatus has its dimensions selected as a function of the amount of water required for the third rinsing operation and of the overall duration of the dishwashing cycle, while the remainder of the cycle following the third rinsing step is used for the demineralization of water which is then stored for the third rinsing step of the immediately succeeding dishwashing cycle.

Another aspect of the invention of like importance resides in the provision that the diaphragm is rinsed with water containing a gloss finish additive for which there is already provided a flush container in the dishwashing machine.

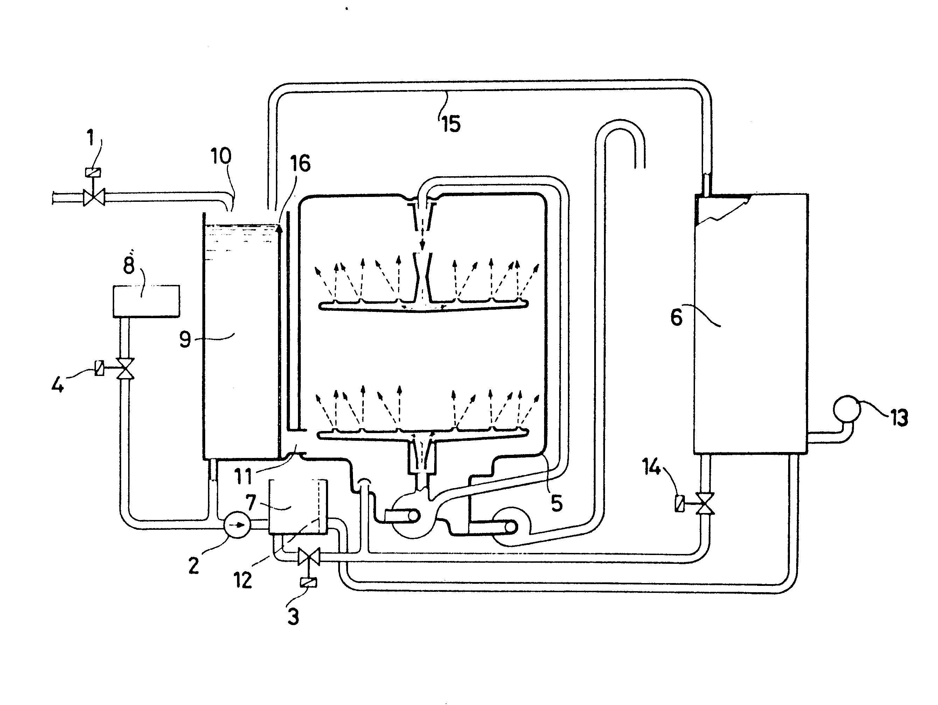

The characteristics and advantages of the invention will become more clearly evident from the following description, given by way of a non-limiting example with reference to the accompanying drawing, the only figure of which shows a diagrammatic representation of the main components of a dishwashing machine according to the invention.

With reference to the drawing, a dishwasching machine comprises a washing chamber 5, to which untreated water is admitted via an inlet 11. This untreated water is used for the pre-washing, the main washing and the first and second rinsing phases.

For the supply of the untreated water, that is, mains water, there is provided an inlet solenoid valve 1 followed by a conventional air-break 10 from which the water enters a mains water reservoir 9, which is thus always filled with water and communicates with the washing chamber 1 via an overflow 16.

A high pressure pump 2 is provided for the transfer of water to be demineralized from reservoir 9 to a receptacle 7 containing a demineralization diaphragm 12. Receptacle 7 thus operates under pressure and has a first outlet communicating with a demineralized water reservoir 6, and a second outlet for the discharge of water which is no longer treatable due to increased concentration of salts, and of water used for rinsing the diaphragm. The second outlet is controlled by a solenoid valve 3.

A gloss finish dispenser 8 is connectable to pump 2 through a solenoid valve 4 for supplying metered quantities of a gloss finish additive to the water used for rinsing or washing the diaphragm 12. A pressostat 13 controls the demineralized water reservoir 6, while a solenoidvalve 14 is operable to control the flow of the demineralized water from reservoir 6 to dishwashing chamber 5 for the third rinsing phase.

An overflow conduit 15 is provided for the transfer of excessive amount of demineralized water from reservoir 6 to untreated water reservoir 9.

A complete operating cycle of the dishwashing machine may be described as follows:

On opening solenoid valve 1, the untreated mains water flows via airbreak 10 and overflow 16 of reservoir 9 to inlet 11 of washing chamber 5, whereby reservoir 9 is completely filled with mains water to be subsequently treated. This occurs during all phases of the washing cycle preceding the third rinsign phase, that is, during the pre-washing, the main washing and the first and second rinsing phases.

The circuit for the demineralized water to be used in the third rinsing phase is dimensioned so as to always have a suffisient amount of water in reservoir 9, taking into account that the periods during which mains water is admitted via solenoid valve 1 are of varying duration and separated from one another by varying intervals, while the passage of water through diaphragm 12 is substantially constant, inasmuch as possible variations of the mineral concentration may be compensated as for instance by providing a continuous discharge of the water from receptacle 7 upstream of the osmosis diaphragm.

As an alternative, it is possible to provide a periodic discharge of the water after the mineral concentration thereof has increased to a certain degree, i.e. after a certain number of demineralization cycles which are by themselves of a discontinuous nature.

Returning to the flow of water, it is noted that the water to be treated flows from reservoir 9 to pump 2 which is designed for conveying small amounts of water, for instance about 100 $cm^3$/min, at a substantial pressure of about 8 bar. Pump 2 supplies the water under pressure to receptacle 7 wherein the demineralization is carried out by means of diaphragm 12. Upstream of diaphragm 12 there remains a fraction of the supplied water which is enriched with the minerals retained by the diaphragm and which amount to about 20% of the water supplied to receptacle 7. The water demineralized by passage through diaphragm 12 flows from downstream thereof into reservoir 6. The flow rate through diaphragm 12 is of such a magnitude that reservoir 6 is substantially full at the moment at which the third rinsing phase is to be initiated. Pressostat 13 is in fact provided for finalizing the demineralization process by interrupting the supply of untreated water to pump 2 when reservoir 6 contains a sufficient amount of water for the third rinsing phase inclusive of an amount of demineralized water for replacing the untreated water remaining at the bottom of washing chamber 5 and in the various conduits.

After conclusion of the conventional pre-washing, main washing and first and second rinsing phases, the third rinsing phase proceeds in the following manner:   at the end of the discharge operation following the second rinsing phase, solenoid valve 14 is opened for a predetermined period of time while the discharge operation is continued. This permits the treated water to enter the washing chamber so as to displace any untreated water remaining at the bottom thereof and in the discharge conduit, whereby to avoid contamination of the treated water used for the third rinsing phase by residual untreated water from the second rinsing phase. In contrast to the problems which may occur when  the supply of this water is derived directly from the water mains with uncontroleld variations of the flow rate doe to varying mains pressure, the amount of water admitted in the present case is always metered very accurately, because the pressure within reservoir 6 is always the same at this point of the operating cycle, and the open passage of solenoid valve 14  can be very accurately dimensioned.

The contamination of the water used for the third rinsing phase by residual water from the secodn rinsign phase cannot, however, be completely prevented by the above descriebd supply and discharge procedure, as the water adhering to the dishes, glasses and the like cannot be evacuated.

This residual amount of water does not, however, exceed about 10% of the water supplied for the third rinsing phase and can therefore be tolerated even if the hardness of the water supply exceeds 60° F.

Subsequently to the above, solenoid valve 14 is again opened for supplyign the remainder of the water for the third rinsing phase, which is then carried out in the usual manner. At the end of the discharge of the water of the third rinsing phase, i.e. during the air-drying phase, the washing or rinsing of the diaphragm takes place. To this effect, an amount of water corresponding to the amount contained in receptacle 7 is supplied from reservoir 9 to pump 2 and from there through opened solenoid valve 3 to washing chamber 5, from which it is immediately discharged by means of the discharge pump. At the same time, solenoid valve 4 is actuated to admit a diminutive amount of gloss finish additive to receptacle 7 during the very first phase of replacement of the water contained therein.

After subsequently closign solenoid valve 4, the supply of water is continued until reservoir 9 is empty so as to remove any residual gloss finish additive from the bottom well of the washing chamber.

The entire system is then ready for a subsequent washing cycle.

The demineralization diaphragm employed in this apparatus may be any type of known diaphragm generally employed for the demineralization of water by inverse osmosis.

During the very first washing cycle, the initiation of the third rinsing phase is dependent on its being enabled by the pressostat 13, as reservoir 6 does not contain any treated water remaining from a preceeding cycle.

It is to be always kept in mind that the treatment of the water is initiated at the instant of starting the operating cycle, and is interrupted only during the interval required for flushing the diaphragm. The capacity of reservoir 9 may be smaller than that of reservoir 6, because the former is replenished during each operating phase. Receptacle 7 is preferably divided into two compartments, one for containing the untreated water to be finally discharged, and the other for containing diaphragm 12 in the form for example of a cartridge facilitating its replacement.

The components situated downstream of pump 2 and upstream of solenoid valve 3 inclusively have to be designed for withstanding the pressure of the demineralization process.

Overflow tube 15 is provided for guarding against malfunction of pressostat 13 resulting in continued supply of treated water after reservoir 6 is filled already.

Any transfer of water from reservoir 9 to dispenser 8 is safely prevented from occurring by solenoid valve 4 being opened only after the level of the water in reservoir 9 is lower than that of the gloss finish in dispenser 8.

It is also possible to design the first compartment of receptacle 7 as part of reservoir 9.

It is also possible to eliminate pressostat 13, in which case pump 2 is kept in operation through the full operating cycle, any excess of the demineralized water supplied to reservoir 6 for the third rinsing phase being then transferred to reservoir 9.

The above description refers to the water for the third rinsing phase, it being this water which determines the final result of the dishwashing operation. This does not, however, exclude the possibility that additional amount of water are demineralized for use in other phases of the operating cycle. The invention is thus not restricted to the embodiment described, various modifications thereof being possible within the scope of the invention.

GRÜNECKER, KINKELDEY, STOCKMAIR & PARTNER

PATENTANWÄLTE

0133677

EUROPEAN PATENT ATTORNEYS

A GRUNECKER. DIPL -ING
DR H KINKELDEY. DIPL -ING
DR W STOCKMAIR. DIPL -ING, AE.E (CALTECH)
DR K SCHUMANN. DIPL -PHYS
P H JAKOB DIPL -ING
DR G BEZOLD DIPL -CHEM
W MEISTER DIPL -ING
H HILGERS DIPL -ING
DR H MEYER-PLATH DIPL -ING

8000 MÜNCHEN 22
MAXIMILIANSTRASSE 58

EP 1758

_ 1 _

# Method and Apparatus for the Demineralization of Water for a Dishwashing Machine

## P a t e n t   C l a i m s

1. A method for the demineralization of water to be used in the operating cycle of a dishwashing machine, characterized in that The demineralization is carried out be inverse osmosis on a fraction of the water required for a full operating cycle of the dishwashing machine.

2. A method according to claim 1, characterized in that said fraction substantially equals the amount of water required for the third rinsing phase.

3. A method according to claim 1, characterized in that the demineralization is carried out throughtout the operating cycle of the dishwashing machine, the water being demineralized after the third rinsing phase being temporarily stored for a subsequent operating cycle.

4.    A method according to claim 1, characterized in that flushing of the demineralization diaphragm is carried out with water containing a metered amount of a gloss finish additive.

5.    A method according to claim 4, characterized in that any residual water containing the gloss finish additive is removed from the receptacle containing said diaphragm after flushing of the latter.

6.    Apparatus for the demineralization of water used in the operating cycle of a dishwashing machine, characterized by comprising a receptacle (7) for containing an inverse osmosis demineralization diaphragm (12), said receptacle communicating with an inlet for water to be treated and an outlet for demineralized water, said outlet on its part being connected to a reservoir (6) for the temporary storage of demineralized water, means (1, 14) being provided for selectively controlling the supply to a washing chamber (5) of untreated water and of demineralized water, respectively, from said temporary storage reservoir.

7.    Apparatus according to claim 6, characterized in that said temporary storage reservoir (6) is provided with overflow means (15) communicating with the untreated water supply means (9).

8.    Apparatus according to claim 6, characterized in that said untreated water supply means comprises a pressure vessel (9) containing water to be treated and communicating with the inlet of said receptacle (7) containing said demineralization diaphragm (12).

9.    Apparatus according to claim 6, characterized in that said receptacle (7) containing said demineralization diaphragm (12) communicates with a dispenser (8) adapted to dispense metered amounts of a gloss finish additive to be added to water used for periodically flushing said demineralization diaphragm.

10. Apparatus according to claim 9, characterized in that said gloss finish additive dispenser (8) is the same one as used during the operating cycle of the dishwashing machine.